# EUROPÄISCHE PATENTSCHRIFT

(11) **EP 3 448 813 B1**
(45) Veröffentlichungstag und Bekanntmachung des Hinweises auf die Patenterteilung: **11.11.2020**
(21) Anmeldenummer: 17723643.7
(22) Anmeldetag: 27.04.2017
(51) Int. Cl.: C02F 1/04, B01D 1/04, B01D 1/26, F28D 1/04, F28D 1/053, C02F 103/08, F28D 7/16, F28D 7/00

(54) **MEERWASSERENTSALZUNGSVORRICHTUNG ZUM ENTSALZEN VON MEERWASSER**
SEA WATER DESALINATION DEVICE FOR DESALINATING SEA WATER
DISPOSITIF DE DESSALEMENT D'EAU DE MER POUR DESSALER DE L'EAU DE MER

(30) Priorität: 29.04.2016 DE 102016107984
(43) Veröffentlichungstag der Anmeldung: 06.03.2019
(73) Patentinhaber: Wärtsilä Serck Como GmbH, 21502 Geesthacht (DE)
(72) Erfinder: ANDREAS, Kandler, 21502 Geesthacht (DE)
(74) Vertreter: RGTH
(86) Internationale Anmeldenummer: PCT/EP2017/060033
(87) Internationale Veröffentlichungsnummer: WO 2017/186839

(56) Entgegenhaltungen:
- EP-A1- 2 475 442
- US-A1- 2012 261 248

## Beschreibung

### Technisches Gebiet

Die Erfindung betrifft eine Meerwasserentsalzungsvorrichtung zum Entsalzen von Meerwasser mittels Destillation nach Anspruch 1 sowie eine Verfahren zum Entsalzen von Meerwasser nach Anspruch 9.

### Stand der Technik

Aus dem Stand der Technik sind verschiedene Verfahren zum Entsalzen von Meerwasser bekannt. Beispielweise werden zur Meerwasserentsalzung und somit zum Erzeugen von Trinkwasser Verdampfersysteme oder Umkehrosmosesysteme eingesetzt. Während die auf Umkehrosmose basierenden Systeme hauptsächlich elektrische Energie benötigen, verwenden Verdampfersysteme neben elektrischer Energie auch thermische Energie aus dem Motorenkühlkreislauf. Unter den Verdampfersystemen aus dem Stand der Technik sind insbesondere Multi Stage Flash (MSF) oder Multi Evaporator Plate (MEP) Systeme bekannt. Im Stand der Technik sind auch Steigrohrverdampfersysteme bekannt.

Nachteilig bei MSF und MEP Anlagen sind vor allem der hohe Einsatz an elektrischer Energie sowie der große Platzbedarf der Anlagen selber, was insbesondere auf einem Schiff mit begrenzten räumlichen Möglichkeiten ungünstig ist. Ferner bringen MEP Anlagen einen erhöhten Wartungs- und Instandhaltungsaufwand mit sich, da die darin verwendeten Wärmetauscherplatten vom sogenannten "Scaling", einer Belagbildung durch Kalziumcarbonat, befreit werden müssen. Scaling spielt vor allem auch eine Rolle bei Steigrohrverdampfersystemen, dessen Rohre regelmäßig "verscalen", sodass eine aufwändige Reinigung der Rohre notwendig ist.

DE 21 17 543 A1 offenbart ein Verfahren und einen Verdampfer zum Verdampfen einer Flüssigkeit. Die Vorrichtung umfasst ein Bündel von Wärmetauscherrohren, durch das Dampf geleitet wird. Mittels einer Sprühvorrichtung wird von oben Frischflüssigkeit auf das Rohrbündel gesprüht, sodass ein Wärmeaustausch zwischen den Dampf in den Rohren und der Flüssigkeit erfolgt.

EP 2 475 442 B1 offenbart einen Mehrfacheffekt-Verdampfer für die mittelniedrige Produktion von Destillaten, der nur einen Verdampfungsturm aufweist, während US 2012/261248 A1 einen "multi stage flash"-Verdampfer offenbart.

### Darstellung der Erfindung: Aufgabe, Lösung, Vorteile

Aufgabe der vorliegenden Erfindung ist es eine Meerwasserentsalzungsvorrichtung derart zu verbessern, dass der Einsatz von elektrischer Energie für die Entsalzung vermindert wird. Gleichzeitig soll der Raumbedarf und das Eigengewicht der Meerwasserentsalzungsvorrichtung deutlich reduziert werden.

Dies wird gelöst durch eine Meerwasserentsalzungsvorrichtung zum Entsalzen von Meerwasser mittels Destillation, umfassend eine erste Einheit zum Entsalzen von Meerwasser, wobei die erste Einheit mindestens eine erste Leitung zum Leiten und Erwärmen von Meerwasser aufweist. Zumindest ein Abschnitt der mindestens eine ersten Leitung ist dabei vollumfänglich von einem Wärmemittel zum Erwärmen von Meerwasser umschließbar und weist einen ersten Winkel zur Horizontalen auf, der 0° oder zwischen 0° und 30° beträgt.

Unter einer Meerwasserentsalzungsvorrichtung ist vor allem ein Verdampfersystem zum Entsalzen von Meerwasser zu verstehen. Die Meerwasserentsalzungsvorrichtung dient vor allem zur Gewinnung von Trinkwasser als Destillat aus Meerwasser und/oder technischem Wasser, was insbesondere durch das Entfernen von Salzen und Mineralien erreicht wird. Unter dem Begriff "Destillation" ist ein thermisches Trennverfahren zu verstehen um Dampf ohne den Gehalt an Salzen und Mineralien von Meerwasser zu trennen, der anschließend kondensiert, bevorzugterweise nach Zugabe entsprechender Elektrolyte, Trinkwasser darstellt. Insbesondere handelt es sich dabei um eine Vakuumdestillation, d.h. eine Destillation unter gegenüber dem Normaldruck verringertem Druck.

Die Meerwasserentsalzungsvorrichtung weist mindestens eine erste Einheit zum Entsalzen von Meerwasser auf. Die erste Einheit zum Entsalzen von Meerwasser ist dazu ausgebildet, zumindest einen Teil des Meerwassers zum Verdampfen zu bringen, indem das Meerwasser erwärmt und somit auf eine Siedetemperatur gebracht wird. Die erste Einheit zum Entsalzen von Meerwasser ist ferner dazu ausgebildet, den in der ersten Einheit erzeugten Dampf vom restlichen, nicht verdampften Meerwasser zu trennen. Die erste Einheit ist insbesondere als Filmverdampfer ausgebildet. Bevorzugterweise weist die Meerwasserentsalzungsvorrichtung mehrere, miteinander verbundene Einheiten zum Entsalzen von Meerwasser auf.

Unter einer Leitung ist vor allem ein Mittel zum Transportieren oder Weiterleiten eines Fluides, wie bspw. Meerwasser oder aufgrund einer teilweisen Verdampfung ein Gemisch von Meerwasser und Wasserdampf, zu verstehen, dabei ist die mindestens eine erste Leitung vor allem als Rohr ausgebildet. Die mindestens eine erste Leitung ist besonders als zylindrischer Hohlkörper mit rundem Durchmesser ausgebildet.

Zumindest ein Abschnitt der mindestens einen ersten Leitung weist einen ersten Winkel zur Horizontalen auf, wobei der erste Winkel 0° oder zwischen 0° und 30° beträgt. Unter der Horizontalen ist eine waagerechte Linie zu verstehen. So ist der mindestens eine Abschnitt der ersten Leitung in Standardausrichtung der Meerwasserentsalzungsvorrichtung, insbesondere wenn diese betriebsbereit ist oder bei Betrieb der Meerwasserentsalzungsvorrichtung, im ersten Winkel zur Horizontalen angeordnet. Die Meerwasserentsalzungsvorrichtung ist dann in ihrer Standardausrichtung, wenn sie, insbesondere betriebsbereit oder bei Betrieb, auf einer horizontalen Oberfläche platziert ist. Im Falle, dass die Meerwasserentsalzungsvorrichtung auf einem Schiff angeordnet ist, ist die Standardausrichtung durch eine Ausrichtung ohne nennenswerten Seegang gekennzeichnet. Die Meerwasserentsalzungsvorrichtung ist bevorzugterweise dazu geeignet auf einem Schiff angeordnet und in Betrieb genommen zu werden.

Der zumindest eine Abschnitt der ersten Leitung ist vor allem geradlinig ausgebildet. Er weist somit keine Krümmung auf. Ferner kann der zumindest eine Abschnitt eine Krümmung aufweisen, wobei der Abschnitt ein erstes Ende und ein zweites Ende aufweist, wobei dann eine gedachte mittige geradlinige Verbindungslinie zwischen dem ersten Ende und dem zweiten Ende einen ersten Winkel zur Horizontalen aufweist.

Insbesondere erstreckt sich der zumindest eine Abschnitt über mindestens 20 %, bevorzugterweise mindestens 35 %, ferner bevorzugt mindestens 50 %, weiter bevorzugt mindestens 75 %, der Länge der ersten Leitung. In einer besonders bevorzugten Ausführungsform erstreckt sich der Abschnitt über die gesamte Länge der ersten Leitung, sodass die gesamte erste Leitung einen ersten Winkel zur Horizontalen aufweist. Insbesondere ist die erste Leitung geradlinig ausgebildet. Die erste Leitung erstreckt sich insbesondere über mindestens 35 %, ferner bevorzugt mindestens 50 %, weiter bevorzugt mindestens 75 %, der Länge der ersten Einheit der Meerwasserentsalzungsvorrichtung.

Zum Erwärmen des Meerwassers ist der mindestens eine Abschnitt der ersten Leitung derart ausgebildet, dass er vollumfänglich von einem Wärmemittel umschließbar ist. Insbesondere ist der mindestens eine Abschnitt vollumfänglich von einem Wärmemittel umschlossen. Bei dem Wärmemittel handelt es sich vor allem um ein Fluid, insbesondere eine Flüssigkeit, wobei diese vor allem unter Druck steht. Dies hat den Vorteil, dass die Siedetemperatur des unter Druck stehenden Wärmemittels gegenüber dem Normaldruck hinauf gesetzt ist, sodass dieses eine höhere Temperatur unter Beibehaltung des flüssigen Zustandes einnehmen kann. Insbesondere handelt es sich bei dem Wärmemittel um ein Kühlmittel eines Motors, das zum Abtransport von Motorwärme dient, bevorzugterweise um Motorkühlwasser. Ferner kann es sich bei dem Wärmemittel um Dampf handeln. Der mindestens eine Abschnitt der ersten Leitung ist insbesondere entlang der gesamten Umfangsrichtung durchgängig von dem Wärmemittel umschließbar oder bevorzugterweise umschlossen.

Durch die im Wesentlichen horizontale Ausrichtung des Abschnittes der mindestens einen ersten Leitung, insbesondere bei einem ersten Winkel von 0°, wird der Wartungsaufwand der gesamten Meerwasserentsalzungsvorrichtung wesentlich reduziert. Das sogenannte Scaling wird verhindert, in anderen Worten eine Krustenbildung innerhalb der ersten Leitung durch Kalziumcarbonat. Dies liegt daran, dass sich durch die nahezu horizontale Anordnung kein Filmaufriss des zusammenhängenden Flüssigkeitsfilms des Meerwassers ergibt, wie er im Stand der Technik in einer sogenannten "Dry-Out-Zone" vorkommt. Durch die erfindungsgemäße Anordnung entsteht innerhalb der ersten Leitung kein statischer Punkt, an dem Ablagerungen entstehen können, sodass die Wahrscheinlichkeit von Ablagerungen in der ersten Einheit stark reduziert wird.

Ferner ergibt sich, insbesondere bei der Anordnung der Meerwasserentsalzungsvorrichtung in einem Schiff, eine besonders leichte Reinigungsmöglichkeit, da durch die im Wesentlichen horizontale Anordnung keine Raumhöhen, sondern nur noch Raumbreiten oder Raumlängen zu berücksichtigen sind. So steht bei der Reinigung der Vorrichtung insbesondere das Schiffsdeck nicht im Wege. Es ergibt sich die Möglichkeit mit einem einfachen Besen oder einer Ultraschalllanze aufwandsminimierend das Innere der ersten Leitung zu reinigen.

Des Weiteren sind die Strömungswiderstände durch die erfindungsgemäße Lösung nochmals deutlich gegenüber dem Stand der Technik reduziert. Daraus resultiert ein minimal möglicher Stromverbrauch. Der vorliegende Erfindungsgegenstand trägt somit insbesondere verschärften und zukünftigen Anforderungen Rechnung, die aus Umweltschutzgründen eine Reduzierung des Stromverbrauches verlangen. Gleichzeitig sind der Raumbedarf und das Eigengewicht der erfindungsgemäßen Meerwasserentsalzungsvorrichtung deutlich geringer ausgebildet.

Bei einer Anordnung mit einem ersten Winkel zwischen 0° und 30° ergibt sich vor allem eine vorgegebene Strömungsrichtung des in der ersten Leitung gebildeten Dampfes. Auch dann werden die oben genannten Vorteile erzielt. Beispielweise wird durch die oben genannte Winkelwahl eine mögliche Scalingzone insbesondere an einem Ende der Leitung gebildet, die insbesondere in Nähe einer vorgesehenen Zugangsöffnung leicht zu reinigen ist.

Die Meerwasserentsalzungsvorrichtung umfasst erfindungsgemäß keine Sprühvorrichtung, die dazu ausgebildet ist Meerwasser von oben auf die Leitungen zu sprühen. Meerwasserentsalzungsvorrichtungen, die eine Sprühvorrichtung umfassen, und somit darauf basieren, dass Meerwasser außen an Leitungen verdampft, in denen innen ein Wärmemittel wie bspw. Dampf angeordnet ist, haben diverse Nachteile, von denen einige im Folgenden beschrieben sind:
Es wird zusätzliche Energie zur Verteilung des Meerwassers, typischerweise mittels Pumpen, benötigt. Im Gegensatz hierzu benötigt die Meerwasserentsalzungsvorrichtung gemäß der vorliegenden Erfindung keine zusätzliche Energie, da das Meerwasser durch den Unterdruck automatisch zugeführt wird. Die Meerwasserentsalzungsvorrichtung ist somit dazu ausgebildet den Fluss des Meerwassers durch die Leitungen ohne den Einsatz von zusätzlicher Energie, insbesondere ohne Pumpen, zu erreichen.

Ferner lassen sich Beläge, die durch Scaling entstehen, und sich an der Außenseite der Leitungen bilden, kaum entfernern. Dies liegt daran, dass die Außenseite der Leitungen kaum zugänglich ist und die Beläge somit nur chemisch mit großem Aufwand behandelt werden können. Bei der vorliegenden Meerwasserentsalzungsvorrichtung lassen sich Beläge, die nur in den Leitungen entstehen können, von außen auf eine einfache Art und Weise entfernen, da durch die im Wesentlichen horizontale Anordnung keine Raumhöhen, sondern nur noch Raumbreiten oder Raumlängen zu berücksichtigen und daher das Schiffsdeck bei einer Reinigung nicht im Weg ist. Es ergibt sich daher die Möglichkeit mit einem einfachen Besen oder einer Ultraschalllanze aufwandsminimierend das Innere der Leitungen zu reinigen, die insbesondere mittels mindestens einer Zugangsöffnung zugänglich sind. Somit ist hier auch eine mechanische Reinigung neben der chemischen Reinigung möglich.

Ferner ist bei Meerwasserentsalzungsvorrichtungen, die Meerwasser von oben auf Leitungen sprühen, die Verdampfung auf den Leitungen (Filmverdampfung) wesentlich weniger turbulent als die Verdampfung in den Leitungen, so wie sie bei der vorliegenden Meerwasserentsalzungsvorrichtung stattfindet. Bei der Filmverdampfung ist die übertragbare Wärme/m² geringer, was zu größeren Übertragungsflächen führt, sodass die Verdampfung insgesamt ineffektiver ist.

Zudem ist bei Meerwasserentsalzungsvorrichtungen umfassend eine Sprühvorrichtung zum Besprühen von Leitungen die Benetzung der Rohre mit Frischwasser sehr inhomogen. Die oberen Leitungen werden stark benetzt, während die unteren Leitungen durch den vorgeschalteten Verdampfungsprozess immer weniger benetzt werden. Um keine Zonen zu erhalten, bei denen es zur "Austrocknung" (Dryout) kommt, wird die Benetzungsrate höher gewählt als physikalisch notwendig und sinnvoll. Die Gefahr eines Dryouts der Leitungen der vorliegenden Meerwasserentsalzungsvorrichtung ist hingegen wesentlich reduziert, da die Leitungen sozusagen im Meerwasser liegen. Überschüssiges Meerwasser wird oberhalb der Leitungen abgeführt.

Erfindungsgemäß umfasst die erste Einheit der Meerwasserentsalzungsvorrichtung mindestens eine zweite Leitung, von der zumindest ein Abschnitt einen zweiten Winkel zur Horizontalen aufweist, wobei dieser zweite Winkel zur Horizontalen 0° oder zwischen 0° und 30° beträgt. Ferner bevorzugt entspricht der erste Winkel dem zweiten Winkel, sodass zumindest die Abschnitte der ersten Leitung und der zweiten Leitung, insbesondere die gesamten Leitungen, parallel zueinander verlaufen. Die zweite Leitung ist vorzugsweise als Rohr ausgebildet.

Bevorzugterweise beträgt der erste Winkel und/oder der zweite Winkel 0° oder zwischen 0° und 20°, insbesondere zwischen 0° und 10°, besonderes bevorzugt zwischen 0° und 5°, zur Horizontalen. In anderen Worten ist der mindestens eine Abschnitt der ersten und/oder der zweiten Leitung im Wesentlichen parallel zur Horizontalen ausgebildet.

Insbesondere erstreckt sich der zumindest eine Abschnitt der zweiten Leitung über mindestens 20 %, bevorzugterweise mindestens 35 %, ferner bevorzugt mindestens 50 %, weiter bevorzugt mindestens 75 %, der Länge der zweiten Leitung. In einer besonders bevorzugten Ausführungsform erstreckt sich der Abschnitt über die gesamte Länge der zweiten Leitung, sodass die gesamte zweite Leitung einen zweiten Winkel zur Horizontalen aufweist. Insbesondere ist die zweite Leitung geradlinig ausgebildet. Die zweite Leitung erstreckt sich insbesondere über mindestens 35 %, ferner bevorzugt mindestens 50 %, weiter bevorzugt mindestens 75 %, der Länge der ersten Einheit der Meerwasserentsalzungsvorrichtung.

Insbesondere ist die mindestens eine erste und/oder zweite Leitung der ersten Einheit, bevorzugterweise die gesamte erste Einheit, als Unterdruckverdampfungsgefäß ausgebildet. In anderen Worten herrscht in mindestens der einen ersten Leitung, bevorzugterweise innerhalb der gesamten ersten Einheit, ein Unterdruck, sodass das Meerwasser in der mindestens einen ersten und/oder zweiten Leitung bei einer gegenüber Normalbedingungen niedrigeren Temperatur zum Sieden kommt.

Erfindungsgemäß weist die erste Einheit der Meerwasserentsalzungsvorrichtung einen ersten Endbereich und einen gegenüberliegenden zweiten Endbereich auf, wobei im ersten Endbereich ein Einlassbereich zum Einlassen von Meerwasser in die mindestens eine erste Leitung angeordnet ist und wobei die mindestens eine erste Leitung im Einlassbereich eine Einlassöffnung aufweist. Der Einlassbereich ist insbesondere als Einlassbecken ausgebildet, aus dem frisches Meerwasser, auch Feed genannt, in die mindestens eine erste Leitung geleitet wird.

Insbesondere umfasst die erste Einheit der Meerwasserentsalzungsvorrichtung eine Vielzahl von ersten Leitungen. Die Vielzahl von ersten Leitungen und/oder die Vielzahl von zweiten Leitungen umfassen jeweils mindestens zwei erste und/oder zwei zweite Leitungen. Bei der Vielzahl von ersten und/oder zweiten Leitungen handelt es sich vor allem jeweils um ein Bündel von Leitungen. Die ersten und/oder zweiten Leitungen sind bevorzugterweise in Höhenrichtung der ersten Einheit übereinander angeordnet. Ferner umfasst die erste Einheit gleich viele erste Leitungen wie zweite Leitungen.

Insbesondere sind die ersten Leitungen und/oder der die zweiten Leitungen untereinander gleich groß ausgebildet. Insbesondere weisen sie den gleichen Durchmesser auf. Insbesondere entspricht die Größe der ersten Leitungen der Größe der zweiten Leitungen. Bevorzugterweise verlaufen sämtliche ersten Leitungen parallel zueinander, während vorteilhafterweise sämtliche zweite Leitungen parallel zueinander verlaufen. Besonders bevorzugt verlaufen die ersten Leitungen parallel zu den zweiten Leitungen.

Im zweiten Endbereich der ersten Einheit weist diese erfindungsgemäß einen Umlenkungsbereich zum Umlenken des Meerwassers aus der mindestens einen ersten Leitung in die mindestens eine zweite Leitung auf. Dabei mündet die mindestens eine erste Leitung in den Umlenkungsbereich. Insbesondere weist sie im Umlenkungsbereich eine Auslassöffnung auf, sodass das Meerwasser aus der mindestens einen ersten Leitung in den Umlenkungsbereich fließen kann. Ferner weist die mindestens eine zweite Leitung im Umlenkungsbereich eine Einlassöffnung auf, sodass Meerwasser aus dem Umlenkungsbereich in die mindestens eine zweite Leitung fließen kann. Die erste Einheit ist derart ausgebildet, dass Meerwasser vom Einlassbereich im ersten Endbereich die mindestens eine erste Leitung in Richtung des zweiten Endbereiches durchläuft und dass Meerwasser ausgehend vom Umlenkungsbereich die mindestens eine zweite Leitungen zurück in Richtung des ersten Endbereiches durchläuft. Die Durchlaufrichtung der mindestens einen ersten Leitung und der mindestens einen zweiten Leitung ist somit besonders bevorzugt entgegengesetzt.

Der Umlenkungsbereich ist insbesondere als Umlenkungsbecken, bevorzugterweise als Ausdampfraum, ausgebildet. Dieser weist dabei insbesondere keine Leitungen auf, sondern das Wasser aus den mehreren ersten Leitungen kann sich im Umlenkungsbereich miteinander vermischen, sodass sich Dampf lösen und entweichen kann. Insbesondere weist jede erste Leitung eine jeweilige Auslassöffnung und jede zweite Leitung eine jeweilige Einlassöffnung im Umlenkungsbereich auf.

Erfindungsgemäß weist der zweite Endbereich der ersten Einheit eine Entweichöffnung für das Entweichen von in der mindestens einen ersten Leitung gebildeten Dampfes aufweist. Die Entweichöffnung dient vor allem zum Abführen des Dampfes aus der mindestens einen ersten Leitung in einen Dampfraum der ersten Einheit. Insbesondere weist der Umlenkungsbereich die Entweichöffnung auf. Durch das Erwärmen des Meerwassers in der mindestens einen ersten Leitung wird das Meerwasser innerhalb der Leitung zum Sieden gebracht, sodass Dampf entsteht und sich ein Gemisch aus Meerwasser und Dampf in Richtung des zweiten Endbereiches bewegt. Durch das Entweichen des Dampfes aufgrund des Umlenkungsbereiches und der Entweichöffnung werden zu hohe Dampfgeschwindigkeiten in der Leitung und ein damit verbundener Druckverlust vermieden, der wiederrum die Verdampfungstemperatur heraufsetzt. Durch das Abführen des Dampfes kann es in der mindestens einen zweiten Leitung nicht zu zusätzlichen Strömungsverlusten führen.

Insbesondere ist die Anzahl der zweiten Leitungen größer als die Anzahl der ersten Leitungen. Die Vorwärmung in den ersten Leitungen benötigt weniger Fläche im Gegensatz zur Verdampfung, was mit weniger Rohre zu erreichen ist. Ferner wird die Verteilung des Feeds vereinfacht, wenn dieser auf weniger Rohre aufgeteilt wird.

Insbesondere erstrecken sich die mindestens eine erste Leitung und/oder die mindestens eine zweite Leitung durchgängig vom ersten Endbereich der ersten Einheit zum zweiten Endbereich der ersten Einheit.

Alternativ kann sich die mindestens eine erste Leitung in einem ersten Leitungsabschnitt durchgängig vom ersten Endbereich zu einem ersten Zwischenbereich erstrecken, wobei sich die mindestens eine erste Leitung in einem zweiten Leitungsabschnitt durchgängig vom ersten Zwischenbereich zum zweiten Endbereich erstreckt. Bei dem ersten Zwischenbereich handelt es sich vor allem um ein Zwischenbecken, insbesondere um einen Ausdampfraum. Der erste Zwischenbereich ist insbesondere derart ausgebildet, dass er keine Leitungen aufweist, sondern sich das Meerwasser aus den ersten Leitungsabschnitten der Vielzahl von ersten Leitungen untereinander vor Eintritt in die zweiten Leitungsabschnitte der ersten Leitungen miteinander vermischen kann. Der erste Leitungsabschnitt der mindestens einen ersten Leitung weist im Einlassbereich bevorzugterweise eine Einlassöffnung und im ersten Zwischenbereich eine Auslassöffnung auf, während der zweite Leitungsabschnitt der mindestens einen ersten Leitung im ersten Zwischenbereich eine Einlassöffnung und im Umlenkungsbereich eine Auslassöffnung aufweist.

Insbesondere weist der erste Zwischenbereich eine Entweichöffnung für das Entweichen von in dem ersten Leitungsabschnitt der mindestens einen ersten Leitung gebildeten Dampfes auf. Ferner kann der Umlenkungsbereich eine Entweichöffnung für das Entweichen von in dem zweiten Leitungsabschnitt der mindestens einen ersten Leitung gebildeten Dampfes aufweisen. Die Aufteilung der ersten Leitung in mehrere Leitungsabschnitte und das Anordnen eines ersten Zwischenbereichs zwischen den Leitungsabschnitten sowie einer Entweichöffnung dient zur Reduzierung eines Druckabfalls entlang der Länge der ersten Leitung bzw. der Länge der ersten Einheit. Je nach Länge der ersten Einheit kann die mindestens eine erste Leitung ebenfalls in mehr als zwei Leitungsabschnitte mit jeweils dazwischen liegenden Zwischenbereichen samt Entweichöffnungen aufgeteilt werden.

Bevorzugterweise weist die erste Einheit einen Auslassbereich im ersten Endbereich auf. Der Auslassbereich ist vom Einlassbereich getrennt ausgebildet. Insbesondere erstreckt sich die mindestens eine zweite Leitung durchgängig vom Umlenkungsbereich im zweiten Endbereich bis zum Auslassbereich des ersten Endbereichs. Der Auslassbereich dient zum Auslassen von restlicher Flüssigkeit aus der ersten Einheit. Die aus der ersten Einheit ausgelassene Flüssigkeit stammt aus dem zuvor eingeführten Meerwasser, weist nach Durchlaufen der ersten Einheit jedoch einen erhöhten Salzgehalt auf, da sich aus einem Teil des Meerwassers bereits Dampf gebildet hat. Ferner weist der Auslassbereich eine Entweichöffnung für innerhalb der mindestens einen zweiten Leitung gebildeten Dampf auf. Insbesondere ist der Auslassbereich als Auslassbecken, vor allem als Ausdampfraum, ausgebildet.

Alternativ erstreckt sich die mindestens eine zweite Leitung in einem ersten Leitungsabschnitt durchgängig vom Umlenkungsbereich im zweiten Endbereich zu einem zweiten Zwischenbereich und in einem zweiten Leitungsabschnitt durchgängig vom zweiten Zwischenbereich zum Auslassbereich im ersten Endbereich. Dabei weist der zweite Zwischenbereich bevorzugterweise eine Entweichöffnung für das Entweichen von im ersten Leitungsabschnitt der zweiten Leitung gebildeten Dampfes auf.

Vorteilhafterweise ist im ersten und/oder im zweiten Endbereich eine Zugangsöffnung für den Zugang zu der mindestens einen ersten und/oder der mindestens einen zweiten Leitung angeordnet. Bei der Zugangsöffnung handelt es sich vor allem um eine Flanschöffnung. Dabei handelt es sich jedoch insbesondere nicht um ein Mannloch. Insbesondere ist die Zugangsöffnung kleiner als ein Mannloch ausgebildet. Die Zugangsöffnung kann mit einem wieder entfernbaren lösbaren Verschluss, insbesondere mit einem Flanschdeckel, insbesondere für den Betrieb der Meerwasserentsalzungsvorrichtung, geschlossen werden.

Das Vorsehen mindestens einer Zugangsöffnung dient vor allem der einfachen Reinigung der Leitungen, die im Stand der Technik aufgrund der Bauweise der bekannten Meerwasserentsalzungsvorrichtungen sehr kompliziert und nur durch die Verwendung von Mannlöchern oder durch den kompletten Abbau der Meerwasserentsalzungsvorrichtung möglich ist. Auch ein Austausch von Leitungen oder Leitungsabschnitten ist aufgrund der Zugangsöffnungen leicht möglich. Durch das Entfallen von Mannlöchern reduziert sich der notwendigen Bauraum der Meerwasserentsalzungsvorrichtung, während sich auch dessen Gewicht proportional verringert.

Insbesondere weist die erste Einheit ein Wärmebecken auf, in dem das Wärmemittel der ersten Einheit sowie zumindest ein Großteil der mindestens einen ersten und/oder zweiten Leitung angeordnet ist. Das Wärmebecken weist im ersten Endbereich und/oder im zweiten Endbereich jeweils einen Wandabschnitt, insbesondere eine Rohrplatte, auf. Der jeweilige Wandabschnitt trennt insbesondere das Wärmebecken vom Einlassbecken und dem Auslassbecken oder dem Umlenkungsbecken. Insbesondere ist die mindestens eine erste Leitung und/oder die mindestens ein zweite Leitung in den Wandabschnitt eingewalzt ausgebildet. Dadurch entfallen insbesondere die im Stand der Technik notwenigen Dichtungen von dort verwendeten Platten, die besonders leicht verschmutzen.

Der Umlenkungsbereich und/oder der Auslassbereich und/oder der Einlassbereich können sich in Längsrichtung an das Wärmebecken anschließen, können jedoch auch seitlich an das Wärmebecken angeordnet sein. Auch der erste und/oder der zweite Zwischenbereich können sich seitlich an das Wärmebecken anschließen.

Vorteilhafterweise weist die Meerwasserentsalzungsvorrichtung eine zweite Einheit zum Entsalzen von Meerwasser auf, wobei die zweite Einheit einen Einlassbereich zum Einlassen von Flüssigkeit aufweist, wobei der Auslassbereich der ersten Einheit mit dem Einlassbereich der zweiten Einheit verbunden ist. So kann eine aus der ersten Einheit ausgelassene Flüssigkeit der zweiten Einheit zugeführt werden. Bei der aus der ersten Einheit ausgelassenen Flüssigkeit handelt es sich vor allem um den Rest des Meerwasser nach Durchlaufen der ersten Einheit, in anderen Worten um eine in der ersten Einheit entstandene Sole, das heißt einer wässrigen Lösung von Salzen, die im Vergleich zum ursprünglichen Meerwasser, das der ersten Einheit ursprünglich zugeführt wurde, einen erhöhten Salzgehalt aufweist. Diese wird insbesondere durch mindestens ein Saugrohr von der ersten Einheit zur zweiten Einheit geleitet. Zusätzlich kann weiteres "frisches" Meerwasser, d.h. Meerwasser, das die erste Einheit nicht durchlaufen hat, dem Einlassbereich der zweiten Einheit zugeführt werden. Streng genommen handelt es sich bereits am Ende der zweiten Leitung um die Sole und nicht das ursprünglich in die erste Einheit eingeführte Meerwasser.

Die zweite Einheit ist insbesondere entsprechend der obigen Ausführungen zur ersten Einheit ausgebildet. Insbesondere ist der Dampfraum der ersten Einheit, in dem der innerhalb der ersten Einheit entstehende Dampf gesammelt wird, derart mit der zweiten Einheit verbunden ist, dass der im Dampfraum gesammelte Dampf in der zweiten Einheit als Wärmemittel zum Erwärmen der mindestens einen ersten Leitung der zweiten Einheit dient. Dafür sind vor allem die Entweichöffnungen der ersten Einheit mit dem Dampfraum, insbesondere über entsprechende Leitungen, verbunden. Vorteilhafterweise weist die erste Einheit ferner einen Tropfenabscheider auf. Der Tropfenabscheider verhindert, dass durch den Dampf mitgerissene Soletropfen in den Kondensationsbereich gelangen. Der Tropfenabscheider ist derart ausgebildet, dass die Soletropfen an diesem agglomerieren und in die Sole zurückfallen.

Besonders bevorzugt weist die Meerwasserentsalzungsvorrichtung eine Vielzahl von Einheiten, insbesondere mindestens drei oder vier Einheiten, auf, die miteinander verbunden sind. Jeder nächsten Einheit der Verbindung wird dabei eine weitere Stufe oder in anderen Worten ein Effekt zugeordnet. Dabei ist das Wärmemittel der ersten Einheit durch ein Kühlmittel eines Motors gebildet, während in den weiteren Einheiten der in der vorherigen Einheit gebildete Dampf als Wärmemittel dient. Alternativ kann auch im ersten Effekt Dampf als Wärmemittel eingesetzt werden. Durch mehr als eine Einheit wird der Energieeinsatz der Meerwasserentsalzungsvorrichtung mit steigender Einheiten- oder Effektanzahl gesenkt.

Ferner weist die Meerwasserentsalzungsvorrichtung einen Kondensator zum Kondensieren von Dampf auf. Der Dampfraum der letzten Einheit ist vor allem mit dem Kondensator verbunden, sodass der Dampf im Kondensator in den flüssigen Zustand überführt wird und somit Trinkwasser und/oder technischen Wasser hergestellt wird.

Ferner wird der Dampf I der letzten Einheit dem Kondensator zur Herstellung von Trinkwasser und/oder technischem Wasser zugeführt.

Der in einer Einheit der Meerwasserentsalzungsvorrichtung erzeugte Dampf kondensiert in der darauf folgenden Einheit. Die Kondensationswärme sorgt für die Verdampfung von Meerwasser im darauf folgenden Effekt. Dies wiederholt sich in den nachfolgenden Effekten.

Der in der letzten Einheit erzeugte Dampf wird dem Kondensator zugeführt, in dem der Dampf kondensiert. Das entstehende Kondensat wird gesammelt und über eine Verbindungsleitung der nächsten Einheit zugeführt. Am Ende wird das Kondensat von der letzten Einheit dem Kondensator zugeführt. Am Kondensator wird das gesammelte Kondensat abgeleitet.

Zudem weist die Meerwasserentsalzungsvorrichtung vor allem ein Kontrollsystem zur Niveauregelung auf. Mithilfe des Kontrollsystems wird das Niveau, in anderen Worten des Pegels, des in der ersten Einheit befindlichen Wassers bzw. Wasser- und Dampfgemisches geregelt. Bevorzugterweise wird das jeweilige Niveau in sämtlichen Einheiten der Meerwasserentsalzungsvorrichtung geregelt. Dazu weist die Meerwasserentsalzungsvorrichtung vor allem einen Niveauermittler in der ersten Einheit, bevorzugterweise in jeder Einheit, auf. Der Niveauermittler ist vorteilhafterweise ein Sensor, vor allem ein Schwimmer oder ein Ultraschallsensor. Der Niveauermittler ist vor allem im Umlenkungsbereich und/oder einem Zwischenbereich und/oder im Auslassbereich angeordnet. Der Niveauermittler ist dazu ausgebildet dem Kontrollsystem eine Rückmeldung über das Niveau des in der jeweiligen Einheit befindlichen Wasser- und Dampfgemisches zu geben, während das Kontrollsystem dazu ausgebildet ist, die Zuführung des Meerwassers in die erste Einheit und/oder die weiteren Einheiten zu regeln. Dies dient dazu den Pegelstand zu regeln und zwar insbesondere auf konstantem Niveau zu halten um Scaling zu vermeiden, indem das Niveau stets oberhalb der obersten Rohrreihe der Einheit gehalten wird.

Ferner bevorzugt kann die Meerwasserentsalzungsvorrichtung eine Wärmequelle von Erwärmen von Meerwasser vor dem Einleiten in die erste Einheit und/oder die weiteren Einheiten aufweisen. Weiterhin umfasst die Meerwasserentsalzungsvorrichtung vorteilhafterweise einen Belüfter zum Belüften der Meerwasserentsalzungsvorrichtung.

In einem weiteren Aspekt betrifft die Erfindung ein Verfahren zur Entsalzung von Meerwasser, wobei das Verfahren das Leiten von Meerwasser durch mindestens eine erste Leitung zum Leiten und Erwärmen von Meerwasser einer ersten Einheit zum Entsalzen von Meerwasser der Meerwasserentsalzungsvorrichtung umfasst, wobei zumindest ein Abschnitt der mindestens einen ersten Leitung einen ersten Winkel zur Horizontalen aufweist, wobei der erste Winkel 0° oder zwischen 0° und 30° beträgt und wobei der mindestens eine Abschnitt vollumfänglich von einem Wärmemittel zum Erwärmen von Meerwasser umschließbar ist. Insbesondere umfasst das Verfahren ferner das Leiten durch mindestens eine zweite Leitung. Erfindungsgemäß umfasst das Verfahren die Verwendung einer oben beschriebenen Meerwasserentsalzungsvorrichtung.

Bei dem Verfahren handelt es sich vor allem um eine mehrstufige Filmverdampfung, wobei jeder Stufe eine Einheit einer Meerwasserentsalzungsvorrichtung zugeordnet ist. Insbesondere wird Meerwasser vor dem Zuführen in die erste Einheit zunächst durch den Kondensator geleitet, sodass in der Meerwasserentsalzungsvorrichtung erzeugter, dort gesammelter Dampf gekühlt wird.

Zumindest ein Teil des durch den Kondensator geleitete Meerwasser wird in den Einlassbereich der ersten Einheit geleitet und durchläuft zumindest die erste Einheit, ferner bevorzugt eine Vielzahl von Einheiten. Zum Erwärmen des Meerwassers wird in der ersten Einheit insbesondere Motorkühlmittel verwendet, während in den anschließenden Einheiten der in der vorherigen Einheit erzeugte Dampf verwendet wird. Die in der vorherigen Einheit nach Durchlaufen dieser verbleibenden Flüssigkeit hat bei jeder weiteren Stufe einen erhöhten Salzgehalt und wird der nächsten Stufe zugeführt. Die am Ende der letzten Kammer verbliebene Flüssigkeit verfügt über einen hohen Salzgehalt und wird deswegen auch als Salzlake bezeichnet. Diese Salzlake wird insbesondere von einer Pumpe abgesaugt und abgeführt.

Ferner umfasst das Verfahren die Verwendung einer Regelung des der ersten Einheit und/oder den weiteren Einheiten zugeführtem Meerwassers, insbesondere mithilfe einer dynamischen Niveauermittlerregelung. Dabei ist vor allem jeder Einheit ein Niveauermittler (der vor allem als Sensor, insbesondere als Schwimmer oder als Ultraschallsensor, ausgebildet ist) zugeordnet, der einem Kontrollsystem der Vorrichtung eine Rückmeldung über ein Niveau, in anderen Worten über einen Pegelstand, des in der jeweiligen Einheit befindlichen Wasser- und Dampfgemisches gibt. Es wird das Niveau derart geregelt, dass eine ständige Benetzung der Leitungen der jeweiligen Einheit gewährleistet ist und sich somit keine Dry-out Zonen bilden können.

Zudem umfasst das Verfahren insbesondere die Belüftung der Meerwasserentsalzungsvorrichtung durch den Kondensator, insbesondere nachdem eine bestimme Menge von Meerwasser die Meerwasserentsalzungsvorrichtung durchlaufen hat. Unter einer Belüftung ist vor allem ein Reduzieren der Wassermenge von in der Meerwasserentsalzungsvorrichtung verbliebendem Wasser zu verstehen, insbesondere von verbleibendem Wasser in dem zweiten und den darauf folgenden Einheiten bzw. Effekten. Bei diesem verbliebenen Wasser handelt es sich vor allem um Meerwasser, das bei einem vorherigen Betreiben der Meerwasserentsalzungsvorrichtung nicht verdampft ist. Zum Belüften umfasst die Meerwasserentsalzungsvorrichtung vor allem einen Belüfter, der mit einem Ausgang der letzten Einheit der Meerwasserentsalzungsvorrichtung verbunden wird. Mithilfe des Belüfters wird Luft aus der Umgebung, d.h. mit Normaldruck, zugeführt. Aufgrund des in den Einheiten herrschenden Unterdrucks in den Einheiten strömt die Umgebungsluft in die letzte Einheit und drückt das dort verbliebene Wasser in Richtung der vorherigen Einheit. Dies setzt sich durch die Verbindung der Einheiten miteinander fort, sodass die Wassermenge in der zweiten Einheit bis zur letzten Einheit erheblich reduziert wird.

Insbesondere umfasst das Verfahren die Schritte, dass ein Druck der Meerwasserentsalzungsvorrichtung, insbesondere in jeder Einheit, festgestellt wird, wobei erst ab dem Erreichen eines Mindestdruckes Meerwasser in die erste Einheit eingelassen wird.

Das Einlassen von weiterem Meerwasser in die weiteren Einheiten erfolgt vor allem temperaturabhängig. Das Verfahren umfasst insbesondere das Erwärmen von Meerwasser vor dem Einlassen in die weiteren Einheiten. Dazu weist die Meerwasserentsalzungsvorrichtung vor allem eine Wärmequelle auf. Durch das Belüften der Meerwasserentsalzungsvorrichtung ist die Wassermenge in der zweiten bis zur letzten Einheit reduziert, sodass ein Wiederanfahren der Meerwasserentsalzungsvorrichtung deutlich schneller erfolgen kann, da sich das vorgewärmte Wasser nicht mit kälterem in den Einheiten verbliebenen Wasser vermischt.

Erfindungsgemäß wird das Verfahren mithilfe einer zuvor beschriebenen Meerwasserentsalzungsvorrichtung durchgeführt.

### Kurze Beschreibung der Zeichnungen

Es werden nachstehend bevorzugte Ausführungsbeispiele der vorliegenden Erfindung anhand der Zeichnungen 1 bis 4 näher erläutert. Es zeigen in rein schematischer Darstellung:
Figur 1: einen Längsschnitt einer ersten Einheit einer erfindungsgemäßen Meerwasserentsalzungsvorrichtung;
Figur 2: einen Längsschnitt einer ersten Einheit einer weiteren erfindungsgemäßen Meerwasserentsalzungsvorrichtung;
Figur 3: einen Längsschnitt einer ersten Einheit einer weiteren erfindungsgemäßen Meerwasserentsalzungsvorrichtung; und
Figur 4: einen Längsschnitt einer Meerwasserentsalzungsvorrichtung umfassend mehrere Einheiten.

### Bester Weg zur Ausführung der Erfindung

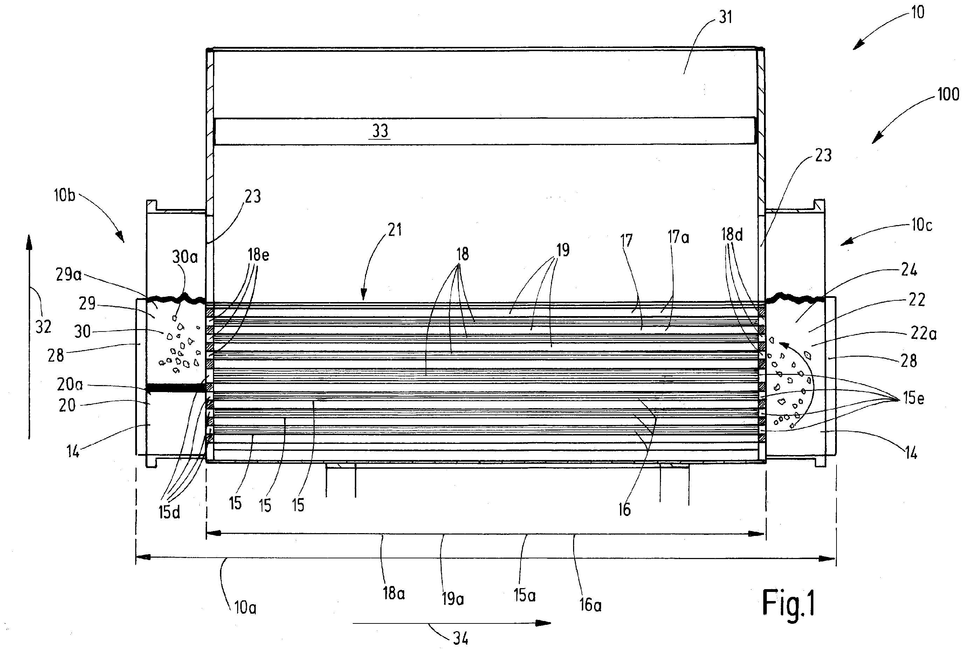

Figur 1 zeigt einen Längsschnitt entlang einer Längsrichtung (34) einer ersten Einheit (10) einer erfindungsgemäßen Meerwasserentsalzungsvorrichtung (100). Die erste Einheit (10) weist einen ersten Endbereich (10b) und einen zweiten Endbereich (10c) sowie eine Länge (10a) auf. Im ersten Endbereich (10b) ist ein Einlassbereich (20), genauer ein Einlassbecken (20a), zum Leiten von Meerwasser (14), genauer Feed, in erste Leitungen (15) der ersten Einheit (10) angeordnet.

Die erste Einheit (10) umfasst eine Anzahl von ersten Leitungen (15). Die ersten Leitungen (15) erstrecken sich geradlinig vom ersten Endbereich (10b) zum zweiten Endbereich (10c) der ersten Einheit (10). Jede der ersten Leitungen (15) weist gegenüber der Horizontalen einen Winkel von 0° auf. So erstreckt sich ein jeweiliger Abschnitt (16) der ersten Leitungen (15), der parallel zur Horizontalen verläuft, über die gesamte Länge (15a) der ersten Leitungen (15), sodass dessen Länge (16a) der Länge (15a) der ersten Leitungen (15) entspricht. Die ersten Leitungen (15) weisen im Einlassbereich (20) eine Einlassöffnung (15d) auf.

Die erste Einheit (10) weist im zweiten Endbereich (10c) einen Umlenkungsbereich (22), genauer ein Umlenkungsbecken (22a), auf. Der Umlenkungsbereich (22) weist eine Entweichöffnung (23) auf, sodass Dampf (24), der sich durch Verdampfung in den ersten Leitungen (15) gebildet hat, entweichen kann. Dafür weisen die ersten Leitungen (15) im Umlenkungsbereich (22) jeweils eine Auslassöffnung (15e) auf.

Ferner weist die ersten Einheit (10) eine Anzahl von zweiten Leitungen (18) auf, die sich ebenfalls geradlinig vom zweiten Ende (10c) zum ersten Ende (10b) der ersten Einheit (10) erstrecken. Genauer verlaufen die zweiten Leitungen (18) vom Umlenkungsbereich (22) zu einem Auslassbereich (29), insbesondere einem Auslassbecken (29a), der ersten Einheit (10). Die zweiten Leitungen (18) weisen gegenüber der Horizontalen einen Winkel von 0° auf. So erstreckt sich ein jeweiliger Abschnitt (19) der zweiten Leitungen (18), der parallel zur Horizontalen verläuft, mit einer Länge (19a) über die gesamte Länge (18a) der jeweiligen zweiten Leitung (18). Die ersten Leitungen (15) und die zweiten Leitungen (18) weisen die gleiche Länge (15a, 18a) auf. Die ersten und zweiten Leitungen (15, 18) sind in Höhenrichtung (32) der ersten Einheit (10) übereinander angeordnet.

Die zweiten Leitungen (18) weisen im Umlenkungsbereich (22) eine Einlassöffnung (18d) und im Auslassbereich (29) eine Auslassöffnung (18e) auf. Die ersten Leitungen (15) sowie die zweiten Leitungen (18) sind innerhalb eines Wärmebeckens (21) angeordnet, in dem sich ein Wärmemittel (17), genauer Motorkühlmittel (17a), zum Erwärmen des Meerwassers innerhalb der Leitungen (15, 18), befindet. Die ersten und die zweiten Leitungen (15, 18) sind bis auf einen Endbereich vollumfänglich von dem Wärmemittel (17) umschlossen.

Ferner weist die erste Einheit (10) sowohl im ersten Endbereich (10b) als auch im zweiten Endbereich (10c) eine Zugangsöffnung (28) auf, die als eine mit einem Flanschdecken geschlossene Flanschöffnung ausgebildet ist. Zudem weist der Auslassbereich (29) eine mit einem Dampfraum (31) der ersten Einheit (10) verbundene Entweichöffnung (23) auf. Die im Auslassbereich (29) gesammelte, restliche Flüssigkeit (30), die Sole (30a), ist das durch die ersten und die zweiten Leitungen (15, 18) gewanderte Meerwasser (14), das nicht verdampft ist. Vor Erreichen des Dampfraumes (31) durchströmt der Dampf (24) einen Tropfenabscheider (33).

Das Einlassbecken (20a) und das Auslassbecken (29a) im ersten Endbereich (10b) sind als separate Becken ausgebildet, die in Höhenrichtung (32) der ersten Einheit (10) übereinander angeordnet sind.

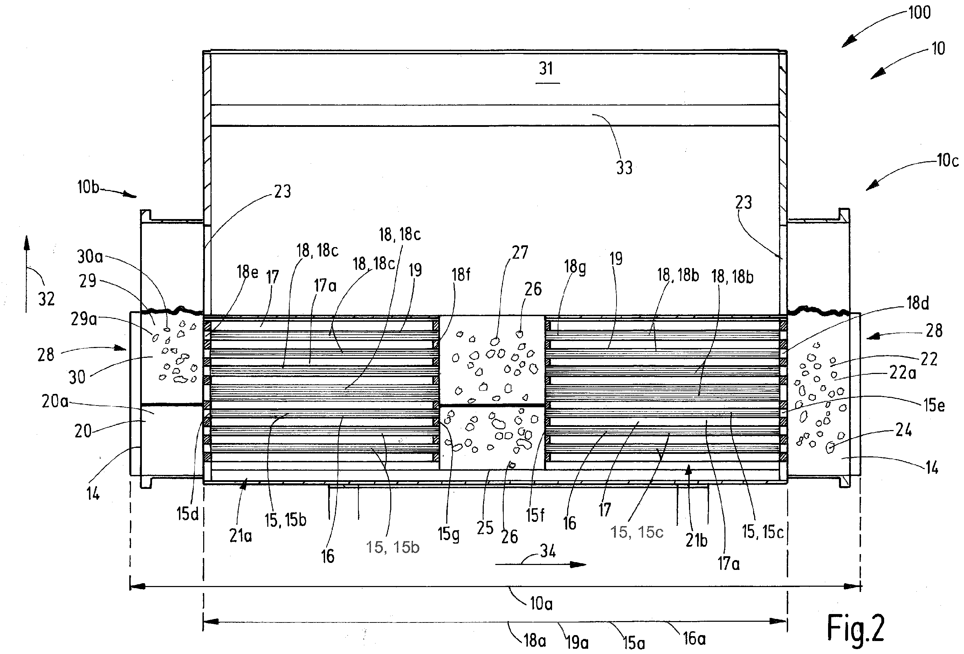

Figur 2 zeigt einen Längsschnitt einer ersten Einheit einer weiteren erfindungsgemäßen Meerwasserentsalzungsvorrichtung (100). Dabei ist die erste Einheit (10) der Figur 2 bis auf die folgenden Unterschiede analog zur ersten Einheit (10) der Figur 1 ausgebildet:

Die ersten Leitungen (15) verlaufen jeweils in zwei Leitungsabschnitten (15b, 15c), einem ersten Leitungsabschnitt (15b), der sich vom Einlassbereich (20) zu einem ersten Zwischenbereich (25), genauer einem Zwischenbecken (26), erstreckt, und einem zweiten Leitungsabschnitt (15c), der sich von dem ersten Zwischenbereich (25) zum Umlenkungsbereich (22) erstreckt. So weist der erste Leitungsabschnitt (15b) eine Einlassöffnung (15d) im Einlassbereich (20) und eine Auslassöffnung (15g) im ersten Zwischenbereich (25) auf, und der zweite Leitungsabschnitt (15c) eine Einlassöffnung (15f) im ersten Zwischenbereich (25) und eine Auslassöffnung (15e) im Umlenkungsbereich (22).

Ebenso verlaufen die zweiten Leitungen (18) jeweils in zwei Leitungsabschnitten (18b, 18c), einem ersten Leitungsabschnitt (18b), der sich vom Umlenkungsbereich (22) zu einem zweiten Zwischenbereich (27), genauer einem Zwischenbecken (26), erstreckt, und einem zweiten Leitungsabschnitt (18c), der sich von dem zweiten Zwischenbereich (27) zum Auslassbereich (29) erstreckt. So weist der erste Leitungsabschnitt (18b) der zweiten Leitungen (18) eine Einlassöffnung (18d) im Umlenkungsbereich (22) und eine Auslassöffnung (18g) im zweiten Zwischenbereich (27) auf, und der zweite Leitungsabschnitt (18c) eine Einlassöffnung (18f) im zweiten Zwischenbereich (27) und eine Auslassöffnung (18e) im Auslassbereich (29).

Der erste und der zweite Zwischenbereich (25, 27) sind insbesondere als separate Zwischenbecken (26) ausgebildet, die seitlich (und daher nicht in Figur 2 ersichtlich) Entweichöffnungen für gebildetes Gas aufweisen. Die ersten Abschnitte (15b) der ersten Leitungen (15) sowie die zweiten Abschnitte (18c) der zweiten Leitungen (18) sind in einem Wärmebecken (21a) angeordnet, während die zweiten Abschnitte (15c) der ersten Leitungen (15) und sowie die ersten Abschnitte (18b) der zweiten Leitungen (18) in einem weiteren Wärmebecken (21b) angeordnet sind, die voneinander getrennt ausgebildet sind.

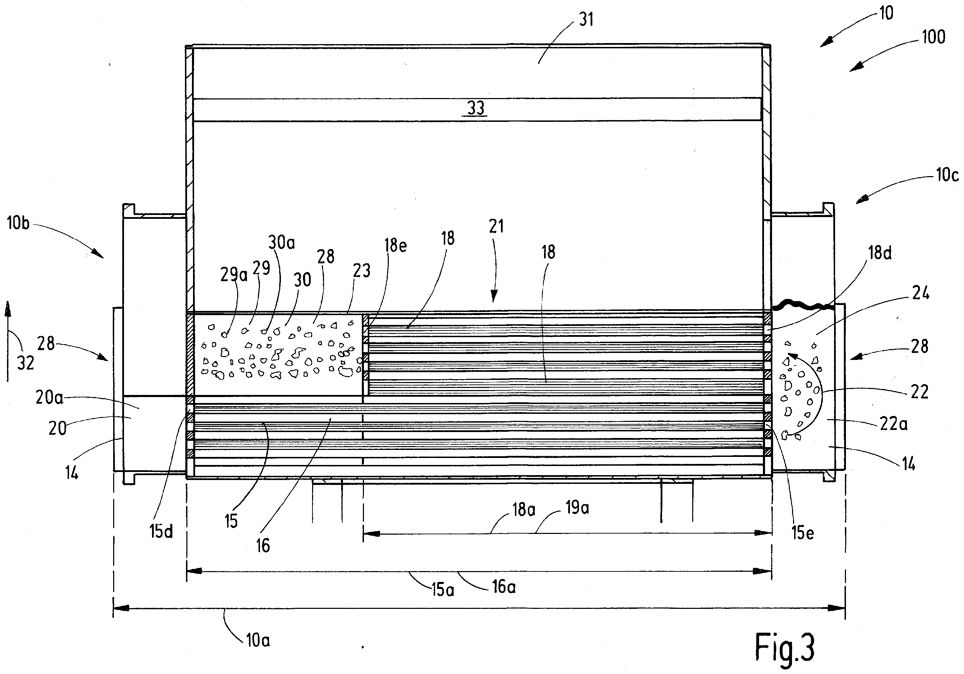

In Figur 3 ist ein Längsschnitt einer ersten Einheit (10) einer weiteren Meerwasserentsalzungsvorrichtung (100) gemäß der Erfindung zu sehen. Bis auf die folgenden Unterschiede ist die erste Einheit (10) der Figur 3 gemäß der ersten Einheit aus Figur 1 ausgebildet:
Die zweiten Leitungen (18) in Figur 3 weisen eine kürzere Länge (18a) als die ersten Leitungen (15) auf. Der Auslassbereich (29), in dem die zweite Leitungen (28) münden, ist in Höhenrichtung (32) oberhalb der ersten Leitungen (15) angeordnet. Ferner weist der Auslassbereich (29) eine Entweichöffnung (23) auf.

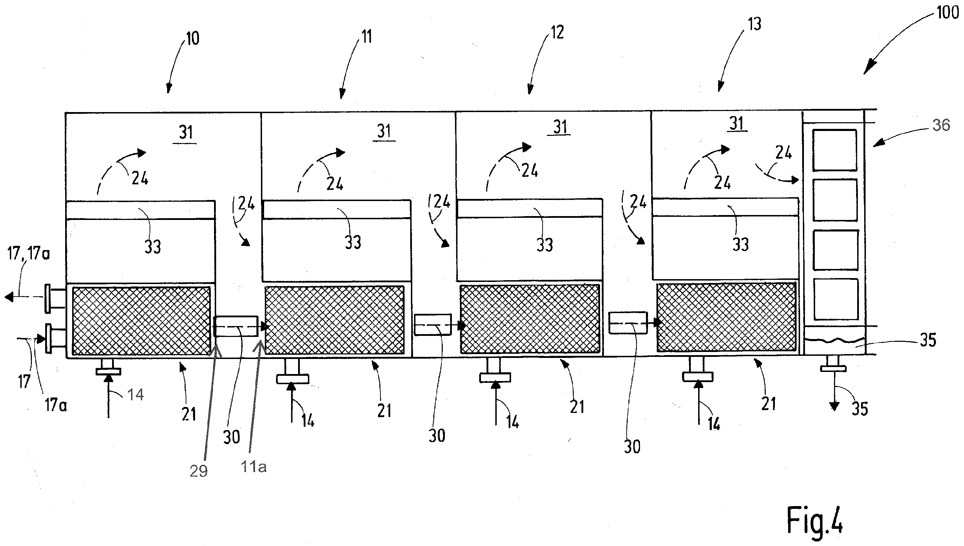

Figur 4 zeigt einen Längsschnitt einer Meerwasserentsalzungsvorrichtung (100) mit mehreren Einheiten (10, 11, 12, 13), und zwar einer ersten Einheit (10), einer zweiten Einheit (11), einer dritten Einheit (12) und einer vierten Einheit (13) sowie einem Kondensator (36). Mithilfe der Meerwasserentsalzungsvorrichtung (100) wird eine mehrstufige Entspannungsverdampfung durchgeführt, wobei die erste Einheit (10) der ersten Stufe, die zweite Einheit (11) der zweiten Stufe, die dritte Einheit (12) der dritten Stufe und die vierte (13) Einheit der vierten Stufe entspricht. In die erste Einheit (10) wird Meerwasser (14) geleitet. Motorkühlwasser (17a) wird als Wärmemittel (17) zum Erwärmen des durch erste und zweite Leitungen innerhalb eines Wärmebeckens (21) fließenden Meerwassers (14) in die erste Einheit (10) geführt.

Frisches Meerwasser wird mechanisch gefiltert und zunächst durch den Kondensator (36) geführt. Dies hat den Vorteil, dass das Meerwasser vor dem Einführen in die erste Einheit bereits erwärmt wird. Ferner sorgt das kalte frische Meerwasser im Kondensator für eine Abkühlung des dort befindlichen Dampfes. Ein Teil des frischen Meerwassers oder bei Bedarf das gesamte Meerwasser wird als Feed der ersten Einheit zugeführt. Insgesamt wird dadurch weniger Wärme im Prozess benötigt wird, sodass insbesondere in der ersten Einheit mehr Trinkwasser und/oder technisches Wasser mithilfe des Motorkühlmittels (17a) hergestellt werden kann.

Der durch die Verdampfung entstehende Dampf (24) wird nach Durchströmen eines Tropfenabscheiders (33) in einem Dampfraum (31) gesammelt und der zweiten Einheit (11) als Wärmemittel (17) für die Leitungen des Wärmebeckens (21) der zweiten Einheit (11) zugeführt. Die in der ersten Einheit verbleibende restliche Flüssigkeit (30), die Sole, wird dem Einlassbereich (20) der zweiten Einheit (11) zugeführt, wobei dem Einlassbereich (20) auch Meerwasser (14) zugeleitet wird.

Auch bei den folgenden Einheiten (12, 13) wird der in der vorherigen Einheit erzeugte Dampf (24) als Wärmemittel (17) verwendet, während die in der vorherigen Einheit verbleibende restliche Flüssigkeit (30), die Sole (30a), der nächsten Einheit zusammen mit Meerwasser (14) zugeführt wird. Der in einer Einheit gebildete Dampf (24) kondensiert in der jeweiligen darauf folgenden Einheit. Der in der vierten Einheit (13) gebildete Dampf (24) wird dem Kondensator (36) zugeführt, in dem dieser kondensiert.

### Bezugszeichenliste

- 100: Meerwasserentsalzungsvorrichtung
- 10: erste Einheit
- 10a: Länge der ersten Einheit
- 10b: erster Endbereich der ersten Einheit
- 10c: zweiter Endbereich der ersten Einheit
- 11: zweite Einheit
- 12: dritte Einheit
- 13: vierte Einheit
- 14: Meerwasser
- 15: erste Leitung
- 15a: Länge der ersten Leitung
- 15b: erster Leitungsabschnitt der ersten Leitung
- 15c: zweiter Leitungsabschnitt der ersten Leitung
- 15d, 15f: Einlassöffnung
- 15e, 15g: Auslassöffnung
- 16: Abschnitt der ersten Leitung
- 16a: Länge des Abschnittes der ersten Leitung
- 17: Wärmemittel
- 17a: Motorkühlmittel
- 18: zweite Leitung
- 18a: Länge der zweiten Leitung
- 18b: erster Leitungsabschnitt der zweiten Leitung
- 18c: zweiter Leitungsabschnitt der zweiten Leitung
- 18d, 18f: Einlassöffnung
- 18e, 18g: Auslassöffnung
- 19: Abschnitt der zweiten Leitung
- 19a: Länge des Abschnittes der zweiten Leitung
- 20: Einlassbereich
- 20a: Einlassbecken
- 21, 21a, 21b: Wärmebecken
- 22: Umlenkungsbereich
- 22a: Umlenkungsbecken
- 23: Entweichöffnung
- 24: Dampf
- 25: erster Zwischenbereich
- 26: Zwischenbecken
- 27: zweiter Zwischenbereich
- 28: Zugangsöffnung
- 29: Auslassbereich
- 29a: Auslassbecken
- 30: Flüssigkeit
- 30a: Sole
- 31: Dampfraum
- 32: Höhenrichtung
- 33: Tropfenabscheider
- 34: Längsrichtung
- 35: Destillat
- 36: Kondensator

## Patentansprüche

1. Meerwasserentsalzungsvorrichtung (100) zum Entsalzen von Meerwasser (14) mittels Destillation,
umfassend eine erste Einheit (10) zum Entsalzen von Meerwasser (14),
wobei die erste Einheit (10) mindestens eine erste Leitung (15) zum Leiten und Erwärmen von Meerwasser (14) aufweist,
wobei
zumindest ein Abschnitt (16) der mindestens einen ersten Leitung (15) einen ersten Winkel zur Horizontalen aufweist,
wobei der erste Winkel 0° oder zwischen 0° und 30° beträgt und
wobei der mindestens eine Abschnitt (16) vollumfänglich von einem Wärmemittel (17) zum Erwärmen von Meerwasser (14) umschließbar ist,
**dadurch gekennzeichnet, dass**
die Meerwasserentsalzungsvorrichtung keine Sprühvorrichtung zum Sprühen von Meerwasser von oben auf Leitungen umfasst,
wobei die erste Einheit (10) der Meerwasserentsalzungsvorrichtung (100) mindestens eine zweite Leitung (18) umfasst,
wobei zumindest ein Abschnitt (19) der zweiten Leitung einen zweiten Winkel zur Horizontalen aufweist,
wobei der zweite Winkel zur Horizontalen 0° oder zwischen 0° und 30° beträgt,
wobei die erste Einheit (10) der Meerwasserentsalzungsvorrichtung (100) einen ersten Endbereich (10b) und einen zweiten Endbereich (10c) aufweist,
wobei im ersten Endbereich (10b) ein Einlassbereich (20) zum Einlassen von Meerwasser (14) in die mindestens eine erste Leitung (15) angeordnet ist, wobei die mindestens eine erste Leitung (15) im Einlassbereich (20) eine Einlassöffnung (15d) aufweist,
wobei im zweiten Endbereich (10c) der ersten Einheit (10) ein Umlenkungsbereich (22) zum Umlenken des Meerwassers (14) aus der mindestens einen ersten Leitung (15) in die mindestens eine zweite Leitung (18) angeordnet ist,
und wobei der zweite Endbereich (10c) eine Entweichöffnung (23) für das Entweichen von in der mindestens einen ersten Leitung gebildeten Dampfes (24) aufweist.

2. Meerwasserentsalzungsvorrichtung (100) nach Anspruch 1, **dadurch gekennzeichnet, dass** der erste Winkel und/oder der zweite Winkel zwischen 0° und 20°, bevorzugterweise zwischen 0° und 10°, besonderes bevorzugt zwischen 0° und 5°, beträgt.

3. Meerwasserentsalzungsvorrichtung (100) nach einem der vorherigen Ansprüche 1 oder 2, **dadurch gekennzeichnet, dass** die erste Einheit (10) eine Vielzahl von ersten Leitungen (15) und Vielzahl von zweiten Leitungen (18) umfasst.

4. Meerwasserentsalzungsvorrichtung (100) nach einem der vorherigen Ansprüche 1 bis 3, **dadurch gekennzeichnet, dass** sich die mindestens eine erste Leitung (15) und/oder die mindestens eine zweite Leitung (18) durchgängig vom ersten Endbereich (10b) der ersten Einheit (10) zum zweiten Endbereich (10c) der ersten Einheit (10) erstreckt.

5. Meerwasserentsalzungsvorrichtung (100) nach einem der vorherigen Ansprüche 1 bis 3, **dadurch gekennzeichnet, dass** sich die mindestens eine erste Leitung (15) in einem ersten Leitungsabschnitt (15b) durchgängig vom ersten Endbereich (10b) zu einem ersten Zwischenbereich (25) erstreckt,
wobei sich die mindestens eine erste Leitung (15) in einem zweiten Leitungsabschnitt (15c) durchgängig vom ersten Zwischenbereich (25) zum zweiten Endbereich (10c) der ersten Einheit (10) erstreckt.

6. Meerwasserentsalzungsvorrichtung (100) nach einem der Ansprüche 1 oder 3 bis 5, **dadurch gekennzeichnet, dass** im ersten Endbereich (10b) und/oder im zweiten Endbereich (10c) eine Zugangsöffnung (28) für den Zugang zu der mindestens einen ersten Leitung (15) und/oder der mindestens einen zweiten Leitung (18) angeordnet ist.

7. Meerwasserentsalzungsvorrichtung (100) nach einem der vorherigen Ansprüche **dadurch gekennzeichnet, dass**
die Meerwasserentsalzungsvorrichtung (100) eine zweite Einheit (11) zum Entsalzen von Meerwasser (14) aufweist,
wobei die erste Einheit (10) einen Auslassbereich (29) zum Auslassen von Flüssigkeit (30) aus der ersten Einheit (10) aufweist,
wobei die zweite Einheit (11) einen Einlassbereich (11a) zum Einlassen von Flüssigkeit (30) aufweist,
wobei der Auslassbereich (29) der ersten Einheit (10) mit dem Einlassbereich (11a) der zweiten Einheit (11) verbunden ist.

8. Meerwasserentsalzungsvorrichtung (100) nach Anspruch 7, **dadurch gekennzeichnet, dass**
innerhalb der ersten Einheit (10) entstehender Dampf (24) in einem Dampfraum (31) gesammelt wird,
wobei der Dampfraum (31) der ersten Einheit (10) derart mit der zweiten Einheit (11) verbunden ist, dass der im Dampfraum (31) gesammelte Dampf (24) in der zweiten Einheit (11) als Wärmemittel (17) zum Erwärmen der mindestens einen ersten Leitung (15) der zweiten Einheit (11) dient.

9. Verfahren zum Entsalzen von Meerwasser (14),
wobei das Verfahren das Leiten von Meerwasser (14) durch mindestens eine erste Leitung (15) zum Leiten und Erwärmen von Meerwasser (14) in einer ersten Einheit (10) zum Entsalzen von Meerwasser (14) einer Meerwasserentsalzungsvorrichtung (100) umfasst,
wobei zumindest ein Abschnitt (16) der mindestens einen ersten Leitung (15) einen ersten Winkel zur Horizontalen aufweist,
wobei der erste Winkel 0° oder zwischen 0° und 30° beträgt und
wobei der mindestens eine Abschnitt (16) vollumfänglich von einem Wärmemittel (17) zum Erwärmen von Meerwasser (14) umschließbar ist,
**dadurch gekennzeichnet, dass** das Verfahren die Verwendung einer Meerwasserentsalzungsvorrichtung (100) nach einem der Ansprüche 1 bis 8 umfasst.

10. Verfahren zum Entsalzen von Meerwasser (14) nach Anspruch 9, **dadurch gekennzeichnet, dass**
das Verfahren ferner eine Belüftung der Meerwasserentsalzungsvorrichtung (100) umfasst.

11. Verfahren zum Entsalzen von Meerwasser (14) nach einem der Ansprüche 9 oder 10, **dadurch gekennzeichnet, dass** das Verfahren die Erwärmung von Meerwasser (14) vor Einleiten in die erste Einheit (10) und/oder weitere Einheiten der Meerwasserentsalzungsvorrichtung (100) umfasst.

## Claims

1. Sea water desalination device (100) for desalination of sea water (14) by means of distillation,
comprising a first unit (10) for desalination of sea water (14),
wherein the first unit (10) has at least one first line (15) for passing and heating sea water (14),
wherein
at least one section (16) of the at least one first line (15) has a first angle to the horizontal,
wherein the first angle is 0° or between 0° and 30° and
wherein the at least one section (16) can be completely enclosed by a heating means (17) for heating sea water (14),
**characterized in that**
the sea water desalination device does not have a spray device for spraying sea water onto lines from above,
wherein the first unit (10) of the sea water desalination device (100) comprises at least one second line (18),
wherein at least one section (19) of the second line has a second angle to the horizontal,
wherein the second angle to the horizontal is 0° or between 0° and 30°, wherein the first unit (10) of the sea water desalination device (100) has a first end region (10b) and a second end region (10c),
wherein in the first end region (10b) an inlet region (20) is arranged for the inlet of sea water (14) into the at least one first line (15), wherein the at least one first line (15) has an inlet opening (15d) in the inlet region (20)
wherein in the second end region (10c) of the first unit (10) a deflection area (22) is arranged for deflecting the sea water (14) from the at least one first line (15) into the least one second line (18),
and wherein the second end region (10c) has an escape opening (23) for the escape of steam (24) formed in the at least one first line.

2. Sea water desalination device (100) according to claim 1, **characterized in that** the first angle and / or the second angle is between 0° and 20°, preferably between 0° and 10°, particularly preferably between 0° and 5°.

3. Sea water desalination device (100) according to one of the preceding claims 1 or 2, **characterized in that** the first unit (10) comprises a plurality of first lines (15) and a plurality of second lines (18).

4. Sea water desalination device (100) according to one of the preceding claims 1 to 3, **characterized in that** the at least one first line (15) and / or the at least one second line (18) extends continuously from the first end region (10b) of the first unit (10) to the second end region (10c) of the first unit (10).

5. Sea water desalination device (100) according to one of the preceding claims 1 to 3, **characterized in that** the at least one first line (15) extends continuously in a first line section (15b) from the first end region (10b) to a first intermediate region (25),
wherein the at least one first line (15) extends continuously in a second line section (15c) from the first intermediate region (25) to the second end region (10c) of the first unit (10).

6. Sea water desalination device (100) according to one of claims 1 or 3 to 5, **characterized in that** in the first end region (10b) and / or in the second end region (10c) an access opening (28) is arranged for access to the at least one first line (15) and / or the at least one second line (18).

7. Sea water desalination device (100) according to one of the preceding claims, **characterized in that** the sea water desalination device (100) has a second unit (11) for desalination of sea water (14),
wherein the first unit (10) has an outlet region (29) for the outlet of liquid (30) from the first unit (10),
wherein the second unit (11) has an inlet region (11a) for the inlet of liquid (30),
wherein the outlet region (29) of the first unit (10) is connected to the inlet region (11a) of the second unit (11).

8. Sea water desalination device (100) according to claim 7, **characterized in that** steam (24) generated within the first unit (10) is collected in a steam space (31),
wherein the steam space (31) of the first unit (10) is connected to the second unit (11) in such a way that the steam (24) collected in the steam space (31) in the second unit (11) serves as a heating means (17) for heating the at least one first line (15) of the second unit (11).

9. A method for desalination of sea water (14),
wherein the method comprises passing sea water (14) through at least one first line (15) for passing and heating sea water (14) in a first unit (10) for desalination of sea water (14) of a sea water desalination device (100),
wherein at least one section (16) of the at least one first line (15) has a first angle to the horizontal,
wherein the first angle is 0° or between 0° and 30° and
wherein the at least a section (16) can be completely enclosed by a heating means (17) for heating sea water (14),
**characterized in that** the method comprises the use of a sea water desalination device (100) according to one of claims 1 to 8.

10. The method for desalination of sea water (14) according to claim 9, **characterized in that** the method further comprises an aeration of the sea water desalination device (100).

11. The method for desalination of sea water (14) according to one of claims 9 or 10, **characterized in that** the method comprises the heating of sea water (14) before it is introduced into the first unit (10) and / or further units of the sea water desalination device (100).

## Revendications

1. Dispositif de dessalement d'eau de mer (100) destiné à dessaler de l'eau de mer (14) au moyen de la distillation,
comprenant une première unité (10) pour dessaler de l'eau de mer (14), sachant que la première unité (10) comporte au moins un premier conduit (15) pour diriger et réchauffer de l'eau de mer (14),
sachant qu'au moins une section (16) de l'au moins un premier conduit (15) comporte un premier angle par rapport à l'horizontale,
sachant que le premier angle est de 0° ou entre 0° et 30° et
sachant que l'au moins une section (16) peut être entourée entièrement par un moyen calorigène (17) pour réchauffer de l'eau de mer (14),
**caractérisé en ce que**
le dispositif de dessalement d'eau de mer ne comprend aucun système de pulvérisation pour pulvériser de l'eau de mer depuis le haut sur les conduits, sachant que la première unité (10) du dispositif de dessalement d'eau de mer (100) comprend au moins un deuxième conduit (18),
sachant qu'au moins une section (19) du deuxième conduit comporte un deuxième angle par rapport à l'horizontale,
sachant que le deuxième angle par rapport à l'horizontale est de 0° ou entre 0° et 30°,
sachant que la première unité (10) du dispositif de dessalement d'eau de mer (100) comporte une première zone d'extrémité (10b) et une deuxième zone d'extrémité (10c),
sachant que dans la première zone d'extrémité (10b) est disposée une zone d'entrée (20) pour introduire de l'eau de mer (14) dans l'au moins un premier conduit (15), sachant que l'au moins un premier conduit (15) comporte une ouverture d'entrée (15d) dans la zone d'entrée (20),
sachant que dans la deuxième zone d'extrémité (10c) de la première unité (10) est disposée une zone de dérivation (22) pour renvoyer de l'eau de mer (14) de l'au moins un premier conduit (15) dans l'au moins un deuxième conduit (18), et sachant que la deuxième zone d'extrémité (10c) comporte une ouverture de dégagement (23) pour le dégagement de vapeur (24) formée dans l'au moins un premier conduit.

2. Dispositif de dessalement d'eau de mer (100) selon la revendication 1, **caractérisé en ce que** le premier angle et/ou le deuxième angle se situe entre 0° et 20°, de préférence entre 0° et 10°, de préférence en particulier entre 0° et 5°.

3. Dispositif de dessalement d'eau de mer (100) selon l'une quelconque des revendications précédentes 1 ou 2, **caractérisé en ce que** la première unité (10) comprend une pluralité de premiers conduits (15) et une pluralité de deuxièmes conduits (18).

4. Dispositif de dessalement d'eau de mer (100) selon l'une quelconque des revendications précédentes 1 à 3, **caractérisé en ce que** l'au moins un premier conduit (15) et/ou l'au moins un deuxième conduit (18) s'étend en général de la première zone d'extrémité (10b) de la première unité (10) à la deuxième zone d'extrémité (10c) de la première unité (10).

5. Dispositif de dessalement d'eau de mer (100) selon l'une quelconque des revendications précédentes 1 à 3, **caractérisé en ce que** l'au moins un premier conduit (15) dans une première section de conduit (15b) s'étend en général de la première zone d'extrémité (10b) à une première zone intermédiaire (25), sachant que l'au moins un premier conduit (15) dans une deuxième section de conduit (15c) s'étend en général de la première zone intermédiaire (25) à la deuxième zone d'extrémité (10c) de la première unité (10).

6. Dispositif de dessalement d'eau de mer (100) selon l'une quelconque des revendications 1 ou 3 à 5, **caractérisé en ce que** dans la première zone d'extrémité (10b) et/ou dans la deuxième zone d'extrémité (10c) est disposée une ouverture d'accès (28) pour l'accès à l'au moins un premier conduit (15) et/ou à l'au moins un deuxième conduit (18).

7. Dispositif de dessalement d'eau de mer (100) selon l'une quelconque des revendications précédentes, **caractérisé en ce que** le dispositif de dessalement d'eau de mer (100) comporte une deuxième unité (11) pour dessaler de l'eau de mer (14),
sachant que la première unité (10) comporte une zone de sortie (29) pour la sortie de liquide (30) de la première unité (10),
sachant que la deuxième unité (11) comporte une zone d'entrée (11a) pour l'entrée de liquide (30),
sachant que la zone de sortie (29) de la première unité (10) est reliée à la zone d'entrée (11a) de la deuxième unité (11).

8. Dispositif de dessalement d'eau de mer (100) selon la revendication 7, **caractérisé en ce**
**qu'**à l'intérieur de la première unité (10) de la vapeur (24) se formant est collectée dans un espace de vapeur (31),
sachant que l'espace de vapeur (31) de la première unité (10) est relié à la deuxième unité (11) de telle manière que la vapeur (24) collectée dans l'espace de vapeur (31) sert dans la deuxième unité (11) en tant que moyen calorigène (17) pour réchauffer l'au moins un premier conduit (15) de la deuxième unité (11).

9. Procédé destiné au dessalement d'eau de mer (14),
sachant que le procédé comprend la conduite d'eau de mer (14) à travers au moins un premier conduit (15) pour diriger et réchauffer de l'eau de mer (14) dans une première unité (10) pour dessaler de l'eau de mer (14) d'un dispositif de dessalement d'eau de mer (100),
sachant qu'au moins une section (16) de l'au moins un premier conduit (15) comporte un premier angle par rapport à l'horizontale,
sachant que le premier angle est de 0° ou se situe entre 0° et 30° et
sachant que l'au moins une section (16) peut être entourée entièrement par un moyen calorigène (17) pour réchauffer de l'eau de mer (14),
**caractérisé en ce que** le procédé comprend l'utilisation d'un dispositif de dessalement d'eau de mer (100) selon l'une quelconque des revendications 1 à 8.

10. Procédé destiné au dessalement d'eau de mer (14) selon la revendication 9, **caractérisé en ce que** le procédé comprend en plus une ventilation du dispositif de dessalement d'eau de mer (100).

11. Procédé destiné au dessalement d'eau de mer (14) selon l'une quelconque des revendications 9 ou 10, **caractérisé en ce que** le procédé comprend le réchauffement d'eau de mer (14) avant introduction dans la première unité (10) et/ou d'autres unités du dispositif de dessalement d'eau de mer (100).
